# EUROPÄISCHE PATENTANMELDUNG

(11) **EP 2 759 433 A2**
(43) Veröffentlichungstag der Anmeldung: **30.07.2014**
(21) Anmeldenummer: 13198310.8
(22) Anmeldetag: 19.12.2013
(51) Int. Cl.: B60J 7/06

(54) **Entriegelungseinrichtung für Schiebeverdeckstruktur und Schiebeverdeckstruktur**

(30) Priorität: 23.01.2013 DE 102013201006
(71) Anmelder: ZF Friedrichshafen AG, 88038 Friedrichshafen (DE)
(72) Erfinder: Tiemann, Burkhard, 49152 Bad Essen (DE); Lagemann, Bernard, 49434 Neuenkirchen (DE)

(57) **Zusammenfassung**

Es wird eine Einrichtung zur Entriegelung einer Schiebeverdeckstruktur (1), insbesondere für einen Lastwagen, bereitgestellt, wobei die Schiebeverdeckstruktur auf ihren Längsseiten jeweils einen auf einem jeweiligen Längsgurt (3, 3') beweglichen Endrollenwagen (6) aufweist, an welchem jeweils ein Bolzen (20, 21) angeordnet ist, der zum Fixieren des Endrollenwagens in einer vorbestimmten Position bezüglich des jeweiligen Längsgurtes dient, wobei die Einrichtung einen Zugmechanismus (22, 22'; 23, 23') aufweist, mittels dessen jeder der Bolzen (20, 21) über ein Betätigungsmittel (24; 25) aus seiner Verriegelungsposition herausbewegbar ist, wobei der Zugmechanismus ein Umlenkmittel (26) aufweist, das mit jedem der Bolzen in Wirkverbindung steht, derart, dass mittels des Betätigungsmittels das Umlenkmittel drehbar und hierdurch jeder der Bolzen bewegbar ist.

## Beschreibung

Die Erfindung betrifft eine Entriegelungseinrichtung für eine Schiebeverdeckstruktur, insbesondere für Lastwagen, gemäß dem Oberbegriff des Anspruchs 1 sowie eine Schiebeverdeckstruktur mit einer Entriegelungseinrichtung.

Es ist bekannt, die Ladefläche von Lastwagen, das heißt Lastkraftwagen, Anhänger oder Auflieger der Lastkraftwagen, mit einer Schiebeverdeckstruktur auszustatten, damit die Ladefläche von oben und von den Seiten zum Be- und Entladen leicht zugänglich gemacht werden kann.

Die Schiebeverdeckstruktur ist gegen unbeabsichtigtes Öffnen (z.B. beim Bremsen oder Beschleunigen des Fahrzeugs) auf beiden Fahrzeugseiten durch Arretiermechanismen gesichert, welche die Endrollenwagen gegen die Laufschienen fixieren. Ein derartiger Mechanismus ist aus DE 196 28 433 C2 bekannt. Der dortige Arretiermechanismus umfasst ein Formteil, welches den jeweiligen Endrollenwagen in einem Festpunkt verhakt.

Ein anderer Mechanismus funktioniert mittels Bolzen, welche die Endrollenwagen gegen die Laufschienen fixieren. Um die gerüstartige Schiebeverdeckstruktur zusammen mit der darauf angeordneten Plane zum Öffnen zurückschieben zu können, müssen die Endrollenwagen zunächst entriegelt werden. Hierzu sind Entriegelungsmechanismen bekannt, mit welchen die Bolzen auf manuelle Betätigung hin zurückgezogen werden. Bei einem bekannten Verdeck erfolgt die Entriegelung über eine an der Fahrzeugseite außerhalb des Laderaumes angeordnete Handschlaufe, die über einen in einer Umlenkrolle umgelenkten Seilzug mit den beiden Entriegelungsbolzen verbunden ist. Hierbei ist der eine Entriegelungsbolzen mit der Umlenkrolle unmittelbar verbunden, und der andere Entriegelungsbolzen ist mit dem anderen Ende des Seilzugs verbunden. Wird an der Schlaufe gezogen, so werden beide Entriegelungsbolzen jeweils zur Fahrzeuginnenseite gezogen, so dass die Endrollenwagen entriegelt sind und gegen die Fahrzeugvorderseite verfahren werden können, wodurch das Verdeck geöffnet wird. Weil die beiden Bolzen auf unterschiedliche Art betätigt werden - der eine über den Seilzug, der andere über die Umlenkrolle direkt - ist diese Einrichtung wenig komfortabel in ihrer Bedienung.

Aufgabe der Erfindung ist es daher, eine komfortabel zu bedienende Entriegelungseinrichtung bereitzustellen.

Diese Aufgabe wird durch eine Einrichtung zur Entriegelung einer Schiebeverdeckstruktur mit den Merkmalen gemäß Anspruch 1 und durch eine Schiebeverdeckstruktur gemäß Anspruch 12 gelöst. Vorteilhafte Weiterbildungen der Erfindung sind in den abhängigen Ansprüchen definiert.

Es wird also eine Einrichtung zur Entriegelung einer Schiebeverdeckstruktur bereitgestellt, insbesondere für einen Lastwagen, wobei die Schiebeverdeckstruktur auf ihren Längsseiten jeweils einen auf einem jeweiligen Längsgurt beweglichen Endrollenwagen aufweist, an welchem jeweils ein Bolzen angeordnet ist, der zum Fixieren des Endrollenwagens in einer vorbestimmten Position bezüglich des jeweiligen Längsgurtes dient, wobei die Einrichtung einen Zugmechanismus aufweist, mittels dessen jeder der Bolzen über ein Betätigungsmittel aus seiner Verriegelungsposition heraus bewegbar ist, wobei der Zugmechanismus ein Umlenkmittel aufweist, das mit jedem der Bolzen in Wirkverbindung steht, derart, dass mittels des Betätigungsmittels das Umlenkmittel drehbar und hierdurch jeder der Bolzen bewegbar ist.

Wie eingangs erwähnt, bezeichnet hier Lastwagen allgemein einen Lastkraftwagen, einen Anhänger und einen Auflieger. Die Einrichtung zur Entriegelung einer Schiebeverdeckstruktur kann darüber hinaus auch für andere Anwendungen eingesetzt werden, beispielsweise für eine Schiebeverdeckstruktur eines Sightseeing-Busses oder eines anderen Sonderfahrzeugs. Die Schiebeverdeckstruktur kann allgemein Straßenfahrzeugen oder schienengebundenen Fahrzeugen zugeordnet sein, wobei ein Öffnen bzw. Schließen der Schiebeverdeckstruktur je nach Anordnung derselben in Fahrzeuglängs- oder in Fahrzeugquerrichtung erfolgen kann. Weiterhin kann die Einrichtung zur Entriegelung einer Schiebeverdeckstruktur auch einer stationären Einrichtung wie beispielsweise einem Container zugeordnet sein. Längsseite bezeichnet die in Fahrtrichtung linke bzw. rechte Seite des Lastwagens. Die vorbestimmte Position der Endrollenwagen umfasst eine solche, in welcher das Schiebeverdeck geschlossen ist. Das Fixieren verhindert, dass sich der Endrollenwagen entlang des Längsgurtes bewegen kann.

Bei der oben genannten Einrichtung werden also beide Bolzen in gleicher Weise betätigt, und zwar über die Drehung des Umlenkmittels. Die Wirkverbindungen zwischen Umlenkmittel und jedem der Bolzen sind zueinander gleich. Auf diese Weise entsteht ein komfortabel zu bedienender Entriegelungsmechanismus für die beiden Endrollenwagen.

Vorteilhaft ist es, wenn die Wirkverbindung mittels zweier Seilzüge realisiert wird, die beide mit dem Umlenkmittel verbunden sind, und wenn der eine Seilzug mit dem einem Bolzen gekoppelt ist und der andere Seilzug mit dem anderen Bolzen gekoppelt ist. Die Seilzüge können jeweils einteilig oder mehrteilig sein, also jeweils aus einem Seil oder aus mehreren Seilen zusammengesetzt sein.

Seilzüge, die aus Metall oder jedem anderen zugfesten Material gefertigt sein können, sind eine unter Gewichtaspekten günstige Realisierung des Zugmechanismus.

Die Wirkverbindung kann auch ganz oder teilweise mittels eines Gestänges realisiert sein, das mit dem Umlenkmittel gekoppelt ist und wobei ein Teil des Gestänges mit dem einen Bolzen gekoppelt ist und der andere Teil des Gestänges mit dem anderen Bolzen gekoppelt ist.

Gestänge, die aus Metall oder jedem anderen stabilen Material gefertigt sein können, sind eine besonders robuste Realisierung des Zugmechanismus.

Das Umlenkmittel kann als ein Umlenkhebel ausgestaltet sein, der drehbar um einen Punkt gelagert ist und an dessen Enden der Zugmechanismus angeordnet ist.

Eine hebelartige Gestaltung des Umlenkmittels ist besonders elegant und gewichtsgünstig zu realisieren.

Weiter vorteilhaft ist, wenn das Umlenkmittel mittels des Zugmechanismus von innerhalb des Laderaums betätigbar ist. Dann ist die Bedienung der Entriegelungseinrichtung besonders komfortabel, denn die Entriegelungseinrichtung kann z. B. von einer Person, die sich gerade auf der Ladefläche des Lastwagens befindet, betätigt werden.

Vorteilhaft ist es auch, wenn ein weiteres Betätigungsmittel vorgesehen ist, und dass das eine Betätigungsmittel an der einen Schiebeverdeck-Längsseite, und das andere Betätigungsmittel an der anderen Schiebeverdeck-Längsseite angeordnet ist.

Diese Ausgestaltung bietet weiteren Bedienungskomfort, denn dann kann die Betätigung der Entriegelungseinrichtung auch von Personen erfolgen, die gerade links oder rechts neben dem Lastwagen stehen. Es entfallen also Laufwege, was Zeitersparnis und Komfortgewinn bedeutet.

Das Umlenkmittel kann im Wesentlichen in der Fahrzeugmittenlängsachse angeordnet sein, insbesondere zwischen zwei Spriegeln, die an den Endrollenwagen angeordnet sind.

Dann entsteht eine nahezu symmetrische Wirkverbindung für die Entriegelung beider Endrollenwagen, was ebenfalls den Bedienungskomfort weiter erhöht. Zudem ist das Umlenkmittel bei der Anordnung zwischen zwei Spriegeln besonders gut vor mechanischer Einwirkung, etwa durch das Verdeck oder durch die Ladung geschützt.

Vorteilhaft ist es des Weiteren, wenn Federelemente vorgesehen sind, welche zum Drücken der Bolzen in ihre Verriegelungsposition ausgestaltet sind. Federelemente, also z.B. Schraubenfedern, sind wirkungsvolle Mittel, um die Bolzen in ihrer Verriegelungsposition zu halten.

Hierbei können die Federelemente auch gegen den Zugmechanismus wirken.

Auf diese Weise wird eine Vorspannung des Zugmechanismus gewährleistet, so dass bei der Betätigung ein Leerweg zur Spannung des Zugmechanismus vermieden wird.

Das Betätigungsmittel kann überdies auch zum Bewegen der Endrollenwagen dienen.

Dann kann Entriegeln und Bewegen der Endrollenwagen ohne ein Umgreifen, also besonders schnell erfolgen.

Zum Bewegen der Endrollenwagen können aber auch Bewegungsmittel vorgesehen sein, die separat von dem Betätigungsmittel sind.

Separate Betätigungsmittel sind mit dem Vorteil verbunden, dass sie an die durchzuführende Bewegung speziell angepasst werden können.

Die Erfindung umfasst auch eine Schiebeverdeckstruktur, umfassend die zuvor beschriebene Einrichtung

Im Nachfolgenden werden Ausführungsformen der Erfindung unter Bezugnahme auf die beigefügte Zeichnung näher beschrieben. Es zeigen:
Fig. 1 eine Schiebeverdeckstruktur, bei der die Entriegelungseinrichtung zum Einsatz kommen kann;
Fig. 2 eine Detailansicht eines vorderen Abschnitts der in Fig. 1 dargestellten Schiebeverdeckstruktur;
Fig. 3 die Entriegelungseinrichtung im Detail;
Fig. 4 eine Seitenansicht der Entriegelungseinrichtung; und
Fig. 5A, 5B Ansichten der Entriegelungseinrichtung von oben bzw. von unten;

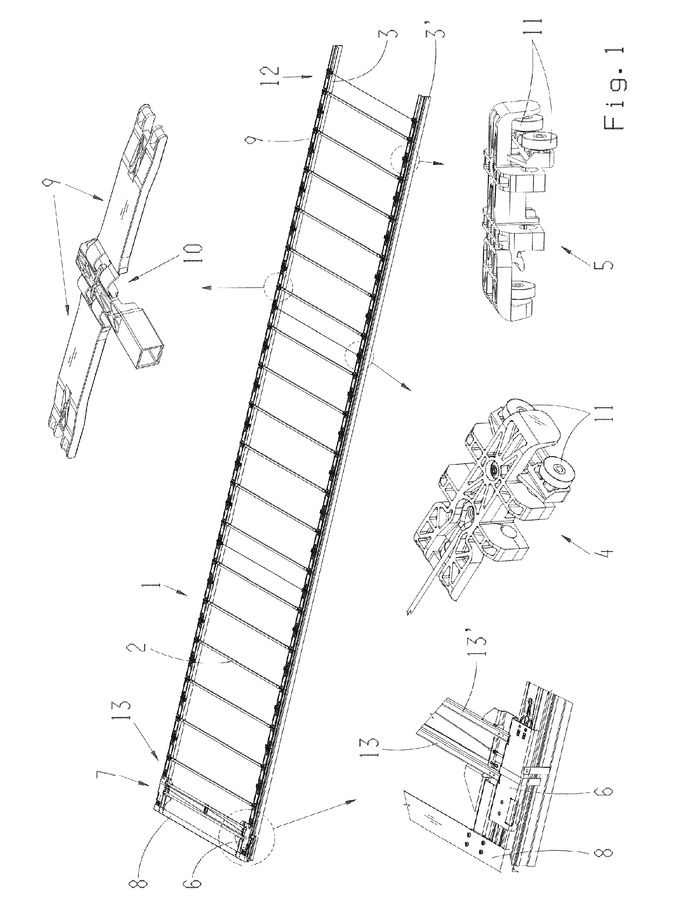

Figur 1 zeigt allgemein eine Schiebeverdeckstruktur 1 für Lastwagen, welche hier in ausgefahrenem bzw. geschlossenem Zustand dargestellt ist. Die Schiebeverdeckstruktur 1 umfasst eine Vielzahl von Spriegeln 2, welche quer (zur Fahrtrichtung) zwischen zwei parallel zueinander verlaufenden Längsgurten 3, 3' angeordnet sind. Auf den Spriegeln 2 liegt eine Folie bzw. Plane auf. Die als Schienen ausgebildeten Längsgurte 3, 3' sind einstückig aus Aluminium hergestellt und sind jeweilig mit Laufflächen versehen, auf welchen eine Vielzahl von Rollenwagen mit jeweiligen Rollen 11 verschiebbar angeordnet sind, von denen hier lediglich ein mehrteilig ausgebildeter Rollenwagen 4 mit Seilanbindung, ein mehrteilig ausgebildeter Standard-Rollenwagen 5 und ein Endrollenwagen 6 exemplarisch dargestellt sind. Der Endrollenwagen 6 befindet sich an dem ersten Ende 7 der Schiebeverdeckstruktur 1, was dem hinteren Ende eines Lastwagens entspricht, an welchem beispielsweise eine Hebebühne angeordnet ist. An dem gegenüberliegenden vorderen zweiten Ende 12 der Schiebeverdeckstruktur 1 befindet sich das geschlossene Ende, an welchem beispielsweise die Führerkabine des Lastkraftwagens angeordnet ist.

Zwischen den jeweils in den Längsgurten 3 und 3' angeordneten Endrollenwagen 6 verläuft quer zu den Längsgurten 3, 3' ein Portalbalken 8, welcher den Abschluss der Schiebeverdeckstruktur 1 bildet. Der Portalbalken 8 dient dazu, einerseits die Plane als in Querrichtung versteifendes Element an dem Lastwagen zu befestigen. Weiterhin greifen typischerweise die Verschlüsse der Türen in den Portalbalken 8 ein, so dass bei verschlossenen Türen diese über die Türverschlüsse des Portalbalkens 8 ebenfalls befestigt und gesichert sind. Der Portalbalken 8 ist über eine hier nicht dargestellte Verbindungsstruktur, welche Hebelarme umfasst, mit den beidseitig angeordneten Endrollenwagen 6 verbunden, so dass durch Verschenken der Hebelarme der Portalbalken 8 nach oben geklappt werden kann, um die Schiebeverdeckstruktur 1 zurückzuschieben. Weiterhin ist der Portalbalken 8 mit einer Winkelform ausgeführt, so dass er im heruntergeklappten Zustand auch die endseitigen Stirnseiten der Längsgurte 3, 3' zumindest teilweise übergreift.

Die Endrollenwagen 6 sind mit den Standard-Rollenwagen 5 über zwischen den jeweiligen Rollenwagen angeordnete Faltplatten 9 verbunden. In der hier dargestellten Ausführungsform sind jeweils 18 Faltplatten 9 pro Längsgurt 3 bzw. 3' vorgesehen. Mittig an den Faltplatten 9 ist eine Spriegelaufnahme 10 vorgesehen, an denen die Spriegel 2 befestigt sind, so dass die Spriegel 2 beim Öffnen der Schiebeverdeckstruktur 1 nach oben geschoben werden.

Zwischen den Standard-Rollenwagen 5 sind jeweils zwei Rollenwagen 4 mit Seilanbindung zum gegenüberliegenden Rollenwagen 4 vorgesehen, was der Stabilisierung dient. Insbesondere wird hierdurch eine zusätzliche Querversteifung erzielt, da durch das Seil, mit welchem die zwei gegenüberliegenden Rollenwagen 4 verbunden sind, Zugkräfte nach außen abgefangen werden. Wie in Figur 1 ersichtlich ist, sind hier zwei solcher quer zu den Längsgurten 3, 3' verlaufenden Seilanbindungen vorgesehen, welche die Längsgurte 3, 3' in Längsrichtung in etwa Dritteln. Die Längsgurte 3, 3' sind aus Metall, wie beispielsweise Aluminium, ausgebildet, wohingegen die Rollenwagen 4, 5, 6 und Faltplatten 9 zumindest überwiegend aus Kunststoff hergestellt sind.

Damit die hier nicht dargestellte Faltplane in geschlossenem Zustand nicht flattert, was zu einem erheblich höheren Kraftstoffverbrauch führen würde, weist sie mehrere hier nicht dargestellte Rungen auf, welche lösbar mit der Ladefläche verbunden werden können, beispielsweise indem sie in entsprechende Ausnehmungen eingesteckt werden. An der Oberseite sind die Rungen mit den Rollenwagen 4, 5 verbunden.

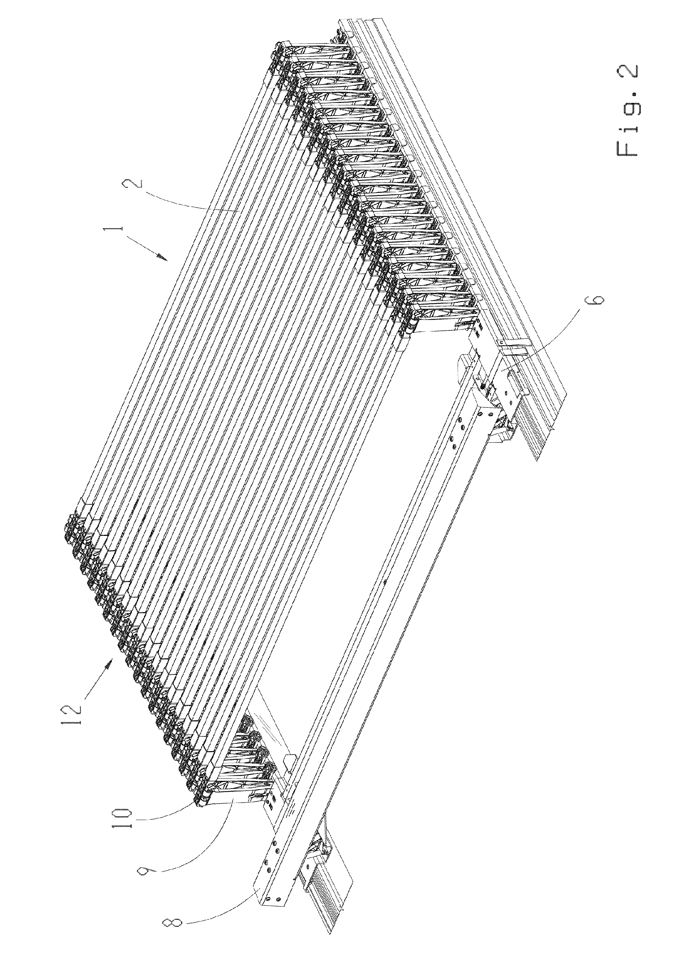

Figur 2 zeigt eine perspektivische Ansicht eines vorderen zweiten Endes 12 der in Figur 1 dargestellten Schiebeverdeckstruktur 1 in geöffnetem Zustand, in welchem der Portalbalken 8 nach oben verschwenkt ist und die in diesem Zustand zusammengeklappten Faltplatten 9 jeweils zusammengefaltet sind, so dass sich auch die mittig in den Faltplatten 9 angeordneten Spriegel 2 in einer angehobenen Stellung befinden. Wie hier gut erkennbar ist, ist die Spriegelanbindung 10 mittig in den Faltplatten 9 ausgebildet. Die zusammengeschobenen Spriegel 2 inklusive Portalbalken 8 erstrecken sich in dem hier dargestellten Zustand über eine Länge von 1,90 m.

Um ein Verschieben des Endrollenwagens 6 in der Endposition bei geschlossener Plane zu verhindern, ist ein Blockiermechanismus vorgesehen. Der Blockiermechanismus kann freigegeben werden, so dass dann der Endrollenwagen 6 entlang der Längsgurte 3, 3' verschiebbar ist. Nach dem Entriegeln der Endrollenwagen 6 können diese in Längsrichtung der Längsgurte 3, 3' gezogen und die Schiebeverdeckstruktur 1 hierdurch geöffnet werden. Damit bei diesem Öffnungsvorgang keine Verkantung, d. h. kein Verkippen oder Verdrehen in einer waagerecht stehenden Ebene, der Endrollenwagen 6 auftritt, weisen diese mehrere hier nicht sichtbare Rollen auf.

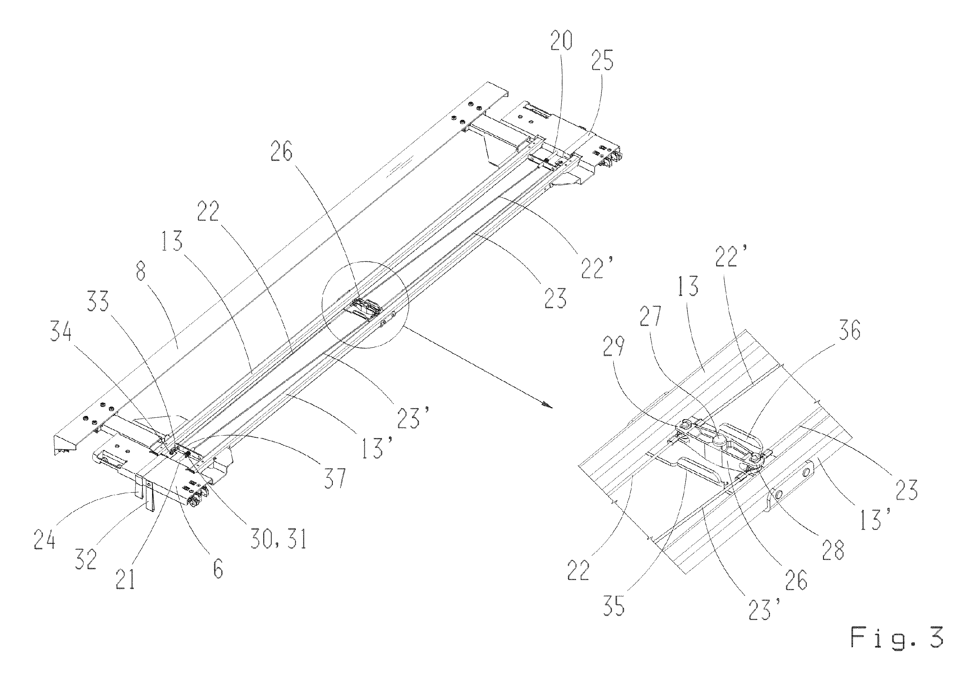

Fig. 3 zeigt die Entriegelungseinrichtung im Detail. Die Entriegelungseinrichtung befindet sich an den beiden Endrollenwagen 6 und an den beiden Spriegeln 13, 13', welche die beiden Endrollenwagen 6 miteinander verbinden. Zur besseren Orientierung ist in der Figur auch der Portalbalken 8 gezeigt, der an den beiden Endrollenwagen 6 fixiert ist. Die Entriegelungseinrichtung wirkt auf zwei Bolzen 20, 21, die zum Fixieren der Endrollenwagen 6 in jeweils einer vorbestimmten Position dienen, und umfasst einen Zugmechanismus 22, 22', 23, 23', mittels dessen die Bolzen 20, 21 über eine Betätigungsschlaufe als Betätigungsmittel 24, 25 betätigbar sind. Jeder der Bolzen 20, 21 ist an einem der Endrollenwagen 6 angeordnet. An jedem der Bolzen 20, 21 ist jeweils ein Seilzug 22, 22', 23, 23' befestigt. Von dem jeweiligen Bolzen 20 bzw. 21 ist der Seilzug 22, 22' bzw. 23, 23' an den Endrollenwagen 6 der gegenüberliegenden Seite herangeführt. Dort ist der jeweilige Seilzug 22, 22', 23, 23' mit einem Betätigungsmittel 24 bzw. 25 gekoppelt, das sich an der Außenseite des Endrollenwagens 6 befindet. Das Betätigungsmittel 24, 25 ist hier jeweils als Handschlaufe ausgebildet. Möglich ist auch eine Ausbildung als Zuglasche. Die Kopplung des Seilzugs 22, 22', 23, 23' mit den Handschlaufen 24, 25 ist hier mittels Kauschen 34 und Presshülsen 33 realisiert. Presshülse 33 und Kausche 34 sind an der Außenseite eines vertikal am Endrollenwagen verlaufenden Blechteils 37 angeordnet. Die durch die Presshülse 33 entstehende Verdickung verhindert das zu weite Hineinrutschen des Seilzugs 22, 22', 23, 23' in Richtung der

Fahrzeugmitte. An jedem der Bolzen 20, 21 ist jeweils ein Federelement 30, 31 z.B. jeweils eine Feder 30, 31, angeordnet, die den jeweiligen Bolzen 20, 21 in seine Verriegelungsstellung drückt, solange der Bolzen 20, 21 nicht über den Seilzug gezogen wird. Die Betätigung der Seilzüge 22, 22', 23, 23' wirkt also gegen die Kraft der Federelemente 30, 31.

In der Mitte zwischen den beiden Endrollenwagen ist ein Umlenkhebel 26 angeordnet, der drehbar um eine vertikale Achse ist, vgl. Detailausschnitt. Die Drehachse 27 befindet sich auf einer Trägerfläche 35, welche an den beiden Spriegeln zwischen den Endrollenwagen 6 angeordnet ist. Die Trägerfläche 35 ist aus Blech und ist an einer Seite vertikal etwas nach oben geführt. Der so gebildete Winkel wirkt als Anschlag 36 bei der Drehung des Umlenkhebels. Der Umlenkhebel 26 steht über die Seilzüge mit beiden Bolzen 20, 21 in Wirkverbindung. Hierzu sind die beiden Seilzüge mit dem Umlenkhebel gekoppelt, und zwar der eine Seilzug 22, 22', 23, 23' mit dem einen Ende 28 des Umlenkhebels 26, der andere Seilzug mit dem anderen Ende 29 des Umlenkhebels 26. Die Seilzüge 22, 22', 23, 23' sind mit dem Umlenkhebel 26 fest gekoppelt. Bewegt sich ein Seilzug 22, 22', weil an ihm gezogen wird, so bewegt sich der Umlenkhebel 26 ebenfalls, und mit diesem bewegt sich auch der andere Seilzug 23, 23' entsprechend mit. Jeder der beiden Seilzüge ist durch jeweils zwei Seile 22, 22' bzw. 23, 23' gebildet, die am Umlenkhebel 26 enden und dort fixiert sind. Selbstverständlich könnte jeder Seilzug 22, 22' bzw. 23, 23' auch durch jeweils ein einziges Seil gebildet sein, das an dem Umlenkhebel 26 fixiert ist.

Durch Ziehen an einer der Betätigungsschlaufen 24, 25 wird also der Umlenkhebel 26 gedreht, wodurch eine Zugkraft über den jeweiligen Seilzug 22, 22', 23, 23' auf den jeweils gegenüber der betätigten Handschlaufe angeordneten Bolzen 20, 21 ausgeübt wird, derart, dass die beiden Bolzen 20, 21 aus ihrer jeweiligen Ruhestellung herausgezogen werden und den jeweiligen Endrollenwagen 6 entriegeln. In der Ruhestellung fixieren die Bolzen den Endrollenwagen 6 in seiner vorbestimmten Position. Weil der Umlenkhebel 26 über die beiden Seilzüge 22, 22', 23, 23' mit beiden Bolzen 20, 21 in Wirkverbindung steht, lassen sich durch Betätigung des Umlenkhebels 26 beide Bolzen 20, 21 gleichzeitig entriegeln. Die Betätigung des Umlenkhebels 26 kann durch Ziehen an einer der beiden Schlaufen 24, 25 erfolgen, die jeweils an der linken und an der rechten Fahrzeugseite, also außerhalb des Laderaumes, angeordnet sind. Des Weiteren kann der Umlenkhebel 26 auch von innerhalb des Laderaumes betätigt werden, z. B. durch eine Person, die auf der Ladefläche steht, und zwar durch Ziehen an einem der Seilzüge 22 bzw. 23 z.B. nach unten.

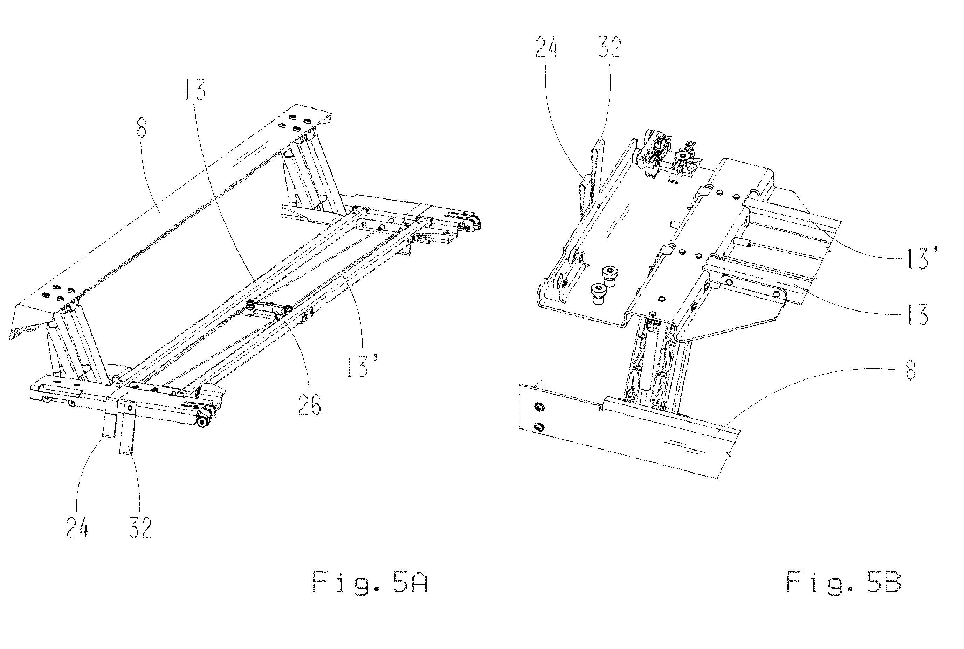

Wie in Fig. 3 und auch in Fig. 5A zu erkennen ist, ist die Entriegelungseinrichtung punktsymmetrisch bezogen auf den Drehpunkt 27 des Umlenkhebels. Auf der einen Fahrzeugseite ist die Handschlaufe 24, 25 vor dem Bolzen 20, 21 angeordnet, auf der anderen Fahrzeugseite ist die Handschlaufe hinter dem Bolzen 20, 21 angeordnet. Aufgrund der punktsymmetrischen Anordnung der Zugseile am Umlenkhebel greifen beim Betätigen des Umlenkhebels 26 an den beiden Bolzen 20, 21 betragsmäßig gleiche Kräfte an, was den Mechanismus einfach und zuverlässig zu bedienen macht. Aufwendige Umlenkrollen werden vermieden.

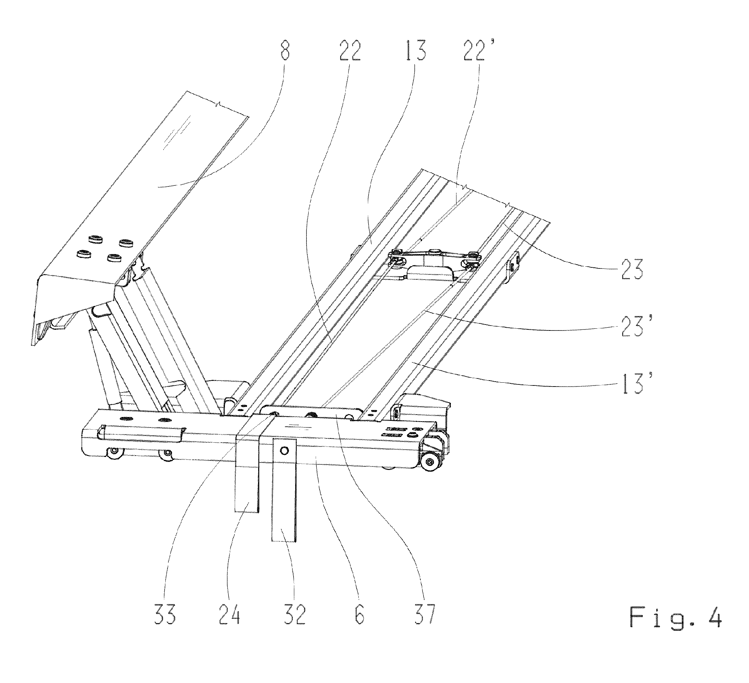

Fig. 4 ist eine Ansicht auf die eine Seite der Entriegelungseinrichtung. Die andere Seite der Entriegelungseinrichtung ist gleichartig ausgestaltet. Hier gut zu erkennen ist, dass die Seilzüge 22, 22', 23, 23' im Zwischenraum zwischen den beiden Spriegeln 13, 13' angeordnet sind. Zu erkennen ist die eine Handschlaufe 24, die mit dem einen der beiden Seilzüge 22, 22' verbunden ist. Des Weiteren vorgesehen ist ein separates Mittel 32 zur Bewegung des Endrollenwagens 6. Dieses Bewegungsmittel 32 ist als vertikal verlaufender Handgriff gestaltet und ist fest mit dem jeweiligen Endrollenwagen 6 gekoppelt.

Fig. 5A zeigt die Entriegelungseinrichtung aus der Sicht von oben und Fig. 5B von unten. Wie in diesen Figuren gut erkennbar ist, sind das Umlenkmittel 26 sowie die Zugmechanismen 22, 22', 23, 23' zwischen den Spriegeln 13, 13' angeordnet und somit durch diese gut gegen mechanische Einwirkungen geschützt.

Die Erfindung funktioniert auch, wenn nur an einem der Seilzüge 22 oder 23 eine Handschlaufe 24, 25 angebracht ist. Dann ist der andere Seilzug 22, 22', 23, 23' fest an dem gegenüberliegenden Endrollenwagen 6 angebracht, bei ansonsten gleicher Ausgestaltung. Diese Ausführungsform stellt eine vereinfachte Form der Erfindung dar.

Anstelle von Seilzügen kann auch ein Gestänge zum Einsatz kommen. Ebenfalls möglich sind Mischformen, also Seilzüge und Gestänge.

### Bezugszeichen

- 1: Schiebeverdeckstruktur
- 2: Spriegel
- 3: Längsgurt
- 3': Längsgurt
- 4: Rollenwagen mit Seilanbindung
- 5: Standard-Rollenwagen
- 6: Endrollenwagen
- 7: erstes Ende
- 8: Portalbalken
- 9: Faltplatten
- 10: Spriegelanbindung
- 11: Rollen
- 12: zweites Ende
- 13: Spriegel
- 13': Spriegel
- 20: Bolzen
- 21: Bolzen
- 22: Zugmechanismus, Seilzug
- 22': Zugmechanismus, Seilzug
- 23: Zugmechanismus, Seilzug
- 23': Zugmechanismus, Seilzug
- 24: Betätigungsmittel, Handschlaufe
- 25: Betätigungsmittel, Handschlaufe
- 26: Umlenkmittel, Umlenkhebel
- 27: Drehpunkt des Umlenkhebels
- 28: Ende des Umlenkhebels
- 29: Ende des Umlenkhebels
- 30: Federelement, Feder
- 31: Federelement, Feder
- 32: Bewegungsmittel
- 33: Presshülse
- 34: Kausche
- 35: Trägerfläche
- 36: Anschlag
- 37: Blechteil

## Patentansprüche

1. Einrichtung zur Entriegelung einer Schiebeverdeckstruktur (1), insbesondere für einen Lastwagen,
wobei die Schiebeverdeckstruktur (1) auf ihren Längsseiten jeweils einen auf einem jeweiligen Längsgurt (3, 3') beweglichen Endrollenwagen (6) aufweist, an welchem jeweils ein Bolzen (20, 21) angeordnet ist, der zum Fixieren des Endrollenwagens (6) in einer vorbestimmten Position bezüglich des jeweiligen Längsgurtes (3, 3') dient, wobei die Einrichtung einen Zugmechanismus (22, 22'; 23, 23') aufweist, mittels dessen jeder der Bolzen (20, 21) über ein Betätigungsmittel (24; 25) aus seiner Verriegelungsposition heraus bewegbar ist,
**dadurch gekennzeichnet, dass** der Zugmechanismus (22, 22'; 23, 23') ein Umlenkmittel (26) aufweist, das mit jedem der Bolzen (20, 21) in Wirkverbindung steht, derart, dass mittels des Betätigungsmittels (24; 25) das Umlenkmittel (26) drehbar und hierdurch jeder der Bolzen (20, 21) bewegbar ist.

2. Einrichtung gemäß Anspruch 1, **dadurch gekennzeichnet, dass** die Wirkverbindung mittels zweier Seilzüge (22, 22'; 23, 23') realisiert ist, die beide mit dem Umlenkmittel verbunden sind, und wobei der eine Seilzug (22, 22') mit dem einem Bolzen (20) gekoppelt ist und der andere Seilzug (23, 23') mit dem anderen Bolzen (21) gekoppelt ist.

3. Einrichtung gemäß Anspruch 1, **dadurch gekennzeichnet, dass** die Wirkverbindung mittels eines Gestänges realisiert ist, das mit dem Umlenkmittel (26) gekoppelt ist, und wobei ein Teil des Gestänges mit dem einem Bolzen (20) gekoppelt ist und der andere Teil des Gestänges mit dem anderen Bolzen (21) gekoppelt ist.

4. Einrichtung gemäß einem der vorherigen Ansprüche, **dadurch gekennzeichnet, dass** das Umlenkmittel (26) als ein Umlenkhebel ausgestaltet ist, der drehbar um einen Punkt (27) gelagert ist und an dessen Enden (28, 29) der Zugmechanismus (22, 22'; 23, 23') angeordnet ist.

5. Einrichtung gemäß einem der vorherigen Ansprüche, **dadurch gekennzeichnet, dass** das Umlenkmittel (26) mittels des Zugmechanismus (22, 22'; 23, 23') von innerhalb des Laderaums betätigbar ist.

6. Einrichtung gemäß einem der vorherigen Ansprüche, **dadurch gekennzeichnet, dass** ein weiteres Betätigungsmittel (25) vorgesehen ist, und wobei das eine Betätigungsmittel (24) an der einen Schiebeverdeck-Längsseite und das andere Betätigungsmittel (25) an der anderen Schiebeverdeck-Längsseite angeordnet ist.

7. Einrichtung gemäß einem der vorherigen Ansprüche, wobei das Umlenkmittel (26) im Wesentlichen in der Fahrzeugmittenlängsachse angeordnet ist, insbesondere zwischen zwei Spriegeln (13, 13'), die an den Endrollenwagen (6) angeordnet sind.

8. Einrichtung gemäß einem der vorherigen Ansprüche, **dadurch gekennzeichnet, dass** Federelemente (30, 31) vorgesehen sind, welche zum Drücken der Bolzen (20, 21) in ihre Verriegelungsposition ausgestaltet sind.

9. Einrichtung gemäß einem der vorherigen Ansprüche, **dadurch gekennzeichnet, dass** die Federelemente (30, 31) gegen den Zugmechanismus (22, 22'; 23, 23') wirken.

10. Einrichtung gemäß einem der vorherigen Ansprüche, **dadurch gekennzeichnet, dass** das Betätigungsmittel (24; 25) auch zum Bewegen der Endrollenwagen (6) dient.

11. Einrichtung gemäß einem der Ansprüche 1 bis 9, **dadurch gekennzeichnet, dass** zum Bewegen der Endrollenwagen (6) Bewegungsmittel (32) vorgesehen sind, die separat von dem Betätigungsmittel (24; 25) sind.

12. Schiebeverdeckstruktur (1), umfassend eine Einrichtung gemäß einem der vorherigen Ansprüche
